# EUROPEAN PATENT APPLICATION

(11) **EP 4 184 726 A1**
(43) Date of publication of application: **24.05.2023**
(21) Application number: 21209013.8
(22) Date of filing: 18.11.2021
(51) Int. Cl.: H01R 13/713, H01R 25/14, H01R 13/14, G01K 1/00, H01R 13/66, H05K 7/00, H01R 13/187

(54) **ELECTRICAL POWER CONNECTOR FOR CONTACTING AN ELONGATED DC POWER DISTRIBUTION BUSBAR, AND METHOD OF MONITORING A CONNECTION**

(71) Applicant: TE Connectivity Germany GmbH, 64625 Bensheim (DE)
(72) Inventor: KEUTZ, Frank, 64625 Bensheim (DE); ROTHENBERGER, Ingo, 64625 Bensheim (DE)
(74) Representative: Grünecker Patent- und Rechtsanwälte PartG mbB

(57) **Abstract**

The present disclosure relates to an electrical power connector for contacting an elongated DC power distribution busbar and to a method of monitoring such a connection. The electrical power connector (104) for contacting an elongated DC power distribution busbar (116) comprises a connector housing (124) with a receptacle (105) for partly receiving the elongated DC power distribution busbar (116), at least one first spring contact element (128A) which is arranged at a first side of the receptacle (105), so that it can be pressed to a first surface (120) of the elongated DC power distribution busbar (116); at least one second spring contact element (128B) which can be pressed to a second surface (122) of the elongated DC power distribution busbar (116) opposing the first surface (120), wherein the at least one second spring contact element (128B) is arranged at a second side of the receptacle (105) opposing to the first side; and a temperature sensing means (130) arranged inside the connector housing (124) for monitoring a temperature at the at least one first and/or second spring contact element (128A, 128B).

## Description

The present disclosure relates to an electrical power connector for contacting an elongated DC power distribution busbar and to a method of monitoring such a connection.

This disclosure generally relates to systems for distributing electrical power from a junction box to electrical devices via a busway or track, to which distribution sub-assemblies or power taps may be removably connected without shutting down the power supply. The busway or track includes multiple conductors, the busbars, to provide DC power.

Further, the Open Compute Project Foundation (OCP) was initiated in 2011 with a mission to apply the benefits of open source and open collaboration to hardware and rapidly increase the pace of innovation in, near and around data centers. As part of the OCP, DC power connectors are needed which are connecting to a busbar of a data center rack cabinet as part of a power supply. This connector has two poles, i.e. plus and minus, and is transmitting a current of e. g. 500 Ampere. For contacting an elongated flat busbar where the opposing surfaces are insulated against each other and can be connected to these opposing poles, the connector is a modified edge connector with spring contacts being pressed onto the busbar contact surface. The connectors are in particular used for power shelves, battery backup unit (BBU) shelves, IT trays/cubby shelves, or server sleds.

Because of the high current, the connector materials heat up. This temperature rise should normally stay within the required limits of the admissible maximum temperature of the respective application.

The proper function of the connector highly relies on the proper function of spring beams and that each of the multiple spring beams carry an even load. Vice versa, if one spring beam should have a malfunction, then the remaining spring beams will have to carry additional current load and therefore will heat up more. More heat will result in the risk that the spring properties of the remaining springs will soften and could cause higher contact resistance. This results again in more heat dissipation and could end up as a chain reaction with the result that the cabinet can catch fire.

Thus, there is still room for improvement of such an electrical power connector, so that the safety is further enhanced, at the same time providing a robust and cost efficient connector structure.

This object is solved by the subject matter of the independent claims. Further aspects of the present disclosure are the subject matter of the dependent claims.

The present disclosure is based on the idea of adding a temperature sensing means, e. g. a very small thermistor, in the area of the spring beams of the connector. Customers can for instance implement the data provided from the thermistor into a permanent diagnostics routine which can be linked to an alarm system. In case of failure, the alarm system which could for example switch off the 500 A load from the connector and by doing this may avoid fire hazard. For an even more precise thermal diagnostic there may be also applied two or more thermistors, so that default parameter changes (like an increase of the ambient temperature) could be excluded from the control diagnostics. Thus, an individual thermistor showing alarming parameters can be identified. In other words, a predictive maintenance of the connector can be achieved, enhancing the safety of the connector in operation.

According to one aspect of the present disclosure, an electrical power connector for contacting an elongated DC power distribution busbar comprises a connector housing with a receptacle for partly receiving the elongated DC power distribution busbar, and at least one first spring contact element which is arranged at a first side of the receptacle, so that it can be pressed to a first surface of the elongated DC power distribution busbar. At least one second spring contact element is provided which can be pressed to a second surface of the elongated DC power distribution busbar opposing the first surface, wherein the at least one second spring contact element is arranged at a second side of the receptacle opposing to the first side. A temperature sensing means is arranged inside the connector housing for monitoring a temperature at the at least one first and/or second spring contact element. In particular, the temperature sensing means is arranged in close vicinity, preferably directly opposite to a contact area, in which (in a mounted state) the first spring contact element is electrically contacting the first surface of the elongated DC power distribution busbar.

Advantageously, providing the temperature sensing means inside the housing and as close as possible to the spring contacts allows to detect a beginning failure condition before an irreversibly critical situation has been reached. In other words, a potential loss of the material characteristics of the spring contact can be detected in an early stage.

According to a further advantageous aspect of the present disclosure, the electrical power connector further comprises at least one secondary spring element which is in force transmitting contact with the at least one first and/or second spring contact element. By attaching a temperature sensing means close to the secondary spring element, an overheating of this component as well as a decline of the spring force can be detected at an early stage.

Temperature sensors which form an electrical output signal from a sensed temperature are needed in many fields of industrial production and automotive applications. Such temperature sensors essentially comprise an outer protective housing that is in contact with a medium to be monitored, and a temperature sensitive element which is arranged inside the protective housing and transduces the sensed temperature into the electrical output signal. In order to achieve fast response time and an accurate measurement, it is essential that a particularly good thermally conductive connection is provided between the temperature sensitive element and the outside medium, so that the temperature at the site of the temperature sensitive element mirrors the temperature outside the protective housing as exactly as possible.

It is clear that any suitable type of temperature sensing element can be used in a temperature sensing means. For instance, said temperature sensing element comprises a resistive temperature detector (RTD), a thermistor, or a silicon-based temperature sensor.

In particular, silicon IC sensors which use single-crystal silicon permit on-chip fabrication of IC (integrated circuit) enhancements. However, the use of IC processes also restricts the operation of silicon based temperature sensors to an upper limit of about 150 °C. Two types of silicon sensors are in general use: spreading resistance based on bulk charge conduction and pn-junction voltage difference. Further, thermistors are based on ceramic-oxide compositions are manufactured to exhibit NTC or PTC (negative, or positive, temperature coefficient) resistance characteristics, where resistance of the sensors decrease, or increase, several orders of magnitude as temperature is increased. NTC sensors offer many advantages for temperature measurement, e.g. small size, durable stability, high accuracy, and precision. In so-called RTD (Resistive Temperature Detector) high-temperature sensors, a platinum-film sensing element is printed and then embedded inside an alumina-ceramic layered structure. The resistance of the platinum element linearly increases as temperature is increased.

A thermoelement sensor consists of two unequal metals, joined to each other at one end. The temperature is measured at this branching. The two metals generate a small voltage, which can be measured and evaluated by a control system. The unequal metals are insulated individually, and with the help of a jacket a tight bifilar configuration is maintained. Thermoelement sensors have the advantage of a wide operating temperature range, largely constant sensitivity over their entire range, and availability in suitable miniaturized sizes.

Advantageously, the temperature sensing means may comprise at least one temperature sensing element formed by a positive temperature coefficient, PTC, thermistor, and/or a negative temperature coefficient, NTC, thermistor, and/or a non-linear thermal resistor, and/or a pyroelectric sensor, and/or a bimetallic sensor.

In order to provide a smart connector comprising some degree of intelligence, the temperature sensing means is formed as a integrated component comprising an analog-digital-converter for generating a digital output signal.

As an alternative to using a transducer element that outputs a signal indicative of a temperature, the temperature sensing means may comprise a current sensing unit for monitoring a current value at the at least one first and/or second spring contact element and an evaluation unit which is operable to calculate the temperature from the sensed current value.

As the main current flows generate magnetic fields, it is possible to place one or more coil like sensors at the contact areas to measure the power of the magnetic fields, if a field gets weaker in a certain area it would indicate that current goes down because of higher contact resistance - this indicates a energy loss by heat dissipation. Of course, any other magnetic field sensor may also be used, e. g. a Hall-effect sensor.

According to a further advantageous example, the temperature sensing means comprises a separately housed sensor unit which is arranged to be in direct mechanical contact with the at least one first and/or second spring contact element. This allows the use of prefabricated components and even a retrofitting of existing connectors.

Alternatively, the assembly of the temperature sensing means according to the present disclosure may also be realized as a so-called MID component. MID is the abbreviation of the term "molded interconnect device" and comprises a three-dimensional circuit carrier which is injection molded from a modified polymeric material. This modification may allow laser activation of circuit tracks on the surface of the circuit carrier. The activated areas become metallized in a chemical metallization bath in order to build conductive tracks which are thus extending into the third dimension. Apart from laser direct structuring (LDS) techniques (additive as well as subtractive) also a two shot injection molding, hot embossing, and insert molding can be used for fabricating a three dimensional substrate that may be employed for assembling a temperature sensing unit according to the present disclosure. Advantageously, the connector housing may at least partly be formed as a molded interconnect device, MID, having a plurality of conductive leads, wherein the temperature sensing means is mounted at the connector housing and is connected to the conductive leads.

If an LDS printed conductor path or any other 2D or 3D conductor printing process according to MID and/or LDS technology is applied to one of the inner half of the insulation body of the connector housing, then a digital sensor temperature sensor can be applied directly in the area of the contact springs and no wiring will be needed to connect a sensor in that area. Applying such sensor gives additional benefits as the digital sensor can be also packed as a system-on-chip (SOC) with an integrated microcontroller. Therefore, the sensor advantageously may be programmed to give a signal output which indicates an error. Such a smart connector may be operable to perform self-diagnosis and may also be part of a decentralized monitoring and safety system.

Furthermore, the temperature sensing means may also comprise a sensing element which is directly printed onto the electrically insulating connector housing according to MID and/or LDS technology, preferably in close vicinity to the potentially heat radiating contact area.

An important aspect of the present disclosure can be seen in the higher integration of temperature diagnostics for a busbar/card edge style connector by means of placing temperature sensing means directly at the contact spring, using conventional wired sensor components or MID/LDS technologies for the wiring. Of course, also a wireless communication interface can be provided for outputting the error signal.

According to an advantageous example of the present disclosure, the first and/or the second spring contact element comprises a unilaterally cut free spring arm with a contact region for contacting the busbar at the free end. This construction allows a particularly easy connecting and disconnecting to/from the busbar and is safe in that the spring forces are monitored via the temperature sensing means. The opposing end of the spring arm has a connecting region at its fixed end which is connectable to a component to be provided with DC power. This may for instance be a crimp connection, a solder connection, a press-fit connection, a welded connection, or a plug connection. Any suitable form of a stable electrical connection can be used for contacting the spring contact elements at their contact region.

According to a further advantageous example, a plurality of said first spring contact elements are arranged equidistantly along a longitudinal axis and a plurality of said second spring contact elements are arranged equidistantly along said longitudinal axis. This construction allows for an evenly distributed contact force applied to the busbar and thus an evenly distributed current density.

In order to monitor a plurality of spring contact elements more closely and thus enhance the operational safety of the power connector, the temperature sensing means comprises two or more temperature sensing elements. Preferably, these temperature sensing elements are arranged distanced apart along a longitudinal axis which in operation extends along the longitudinal axis of the busbar.

The present disclosure further relates to a corresponding method of monitoring a connection between at least one electronic component to a DC power distribution busbar, using such an electrical power connector, the method comprising the following steps:
connecting the electrical power connector to the elongated DC power distribution busbar, so that the at least one first spring contact element contacts a first pole of said DC power distribution busbar and the at least one second spring contact element contacts a second pole of said DC power distribution busbar,
connecting the temperature sensing means to a control unit which reads an output signal of the temperature sensing means and generates a warning signal if the output signal is indicative of an abnormal operational state.

Such a warning (or alarm) signal allows the system to react to the abnormal state in an early state, so that no catastrophic event such as a fire results.

For instance, the output signal of the temperature sensing means may be compared to a predefined temperature threshold value, and the warning signal is generated if the output signal exceeds the threshold value. In order to create an early warning system, this threshold can be chosen to be much lower than the actual admissible maximum temperature of the connector components.

As mentioned above, an alternative method of determining the temperature at the spring contact elements involves determining the current density at the at least one first and/or second spring contact element and calculating the respective temperature therefrom. Such a temperature measurement without a dedicated sensor by monitoring e. g. the current through the device and using of connector specific algorithms to calculate the critical thermal energy reduces the required space and enhances the accuracy of the monitoring.

Coil style sensors which measure the magnetic field strength are used for indirectly measuring the temperature. Of course, any other magnetic field sensor may also be used, e. g. a Hall-effect sensor.

Furthermore, advantageously the control unit is arranged inside the electrical power connector, and the warning signal is a shutdown signal which disconnects the at least one electronic component from the DC power distribution busbar. Thus, a particularly fast reaction to a potential failure and fire hazard can be achieved.

The accompanying drawings are incorporated into the specification and form a part of the specification to illustrate several embodiments of the present disclosure. These drawings, together with the description serve to explain the principles of the disclosure. The drawings are merely for the purpose of illustrating the preferred and alternative examples of how the disclosure can be made and used, and are not to be construed as limiting the disclosure to only the illustrated and described embodiments. Furthermore, several aspects of the embodiments may form-individually or in different combinations-solutions according to the present disclosure. The following described embodiments thus can be considered either alone or in an arbitrary combination thereof. Further features and advantages will become apparent from the following more particular description of the various embodiments of the disclosure, as illustrated in the accompanying drawings, in which like references refer to like elements, and wherein:
- **FIG. 1**: shows a perspective view of an exemplary power supply shelf for a data center;
- **FIG. 2**: shows a schematic perspective view of a power shelf connected to a DC power busbar;
- **FIG. 3**: shows a schematic perspective view of a cable harness with a power connector;
- **FIG. 4**: shows a schematic perspective view of the power connector;
- **FIG. 5**: shows another schematic perspective view of the power connector of Fig. 4;
- **FIG. 6**: shows a perspective view of a spring contact element;
- **FIG. 7**: shows a perspective view of the connector of Fig. 4 without the housing;
- **FIG. 8**: shows a detail of Fig. 7;
- **Fig. 9**: shows a schematic representation of an exemplary temperature sensor;
- **Fig. 10**: shows a perspective sectional view of the power connector of Fig. 4;
- **Fig. 11**: schematically illustrates an MID mounted temperature sensor;
- **Fig. 12**: schematically illustrates a temperature sensing means according to a further example;
- **Fig. 13**: shows a detail of Fig. 12.

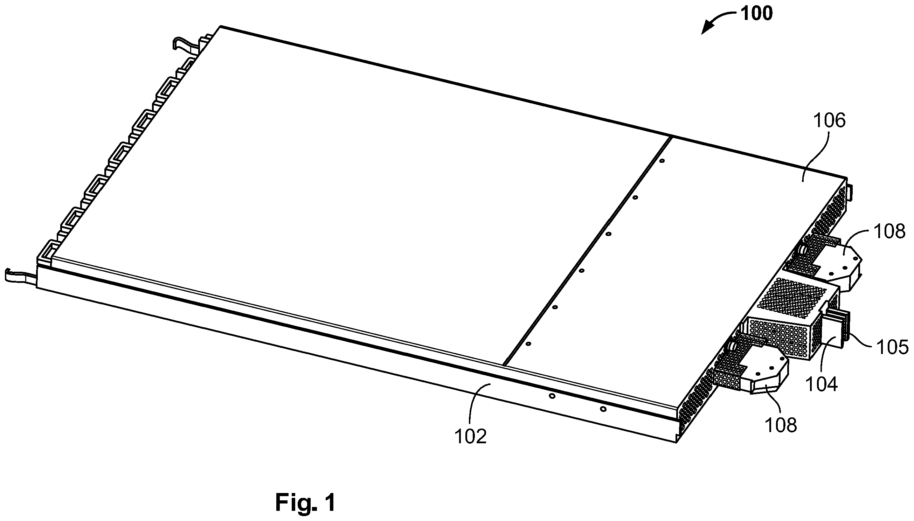

The present disclosure will now be further explained referring to the Figures, and firstly referring to Fig. 1. Fig. 1 shows a perspective view of an exemplary power supply shelf 100 for a data center. The power supply shelf 100 may for instance be compatible to the open compute project (OCP). The power supply shelf 100 comprises a metal casing 102 with a cover 106 protecting the electronic components mounted on the power supply shelf 100. The electronic components may for instance comprise AC/DC converters for providing a DC power from an AC source. The AC input power is connected to the power supply shelf 100 via input connectors 108.

The DC power is output via an electrical power connector 104 for contacting an elongated DC power distribution busbar.

Various electronic components, e. g. AC/DC converters, are connected to the input connectors 108 via input cables (not visible in the drawing). Furthermore, a plurality of output cables 114 connected to the electronic components are attached to the power connector 104. The power connector 104 has a receptacle 105 which in a mounted state partly encompasses the DC power distribution busbar to contact it in the manner of an edge connector.

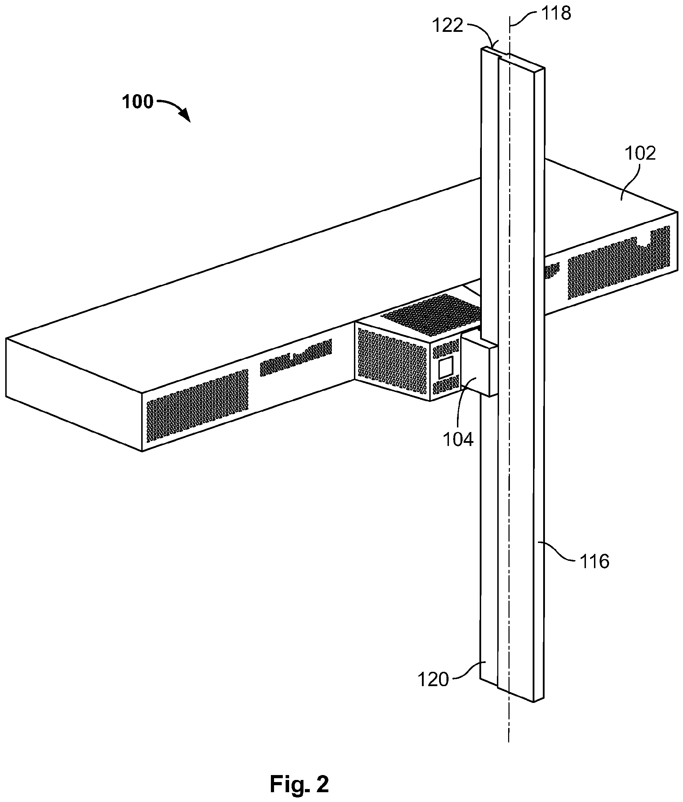

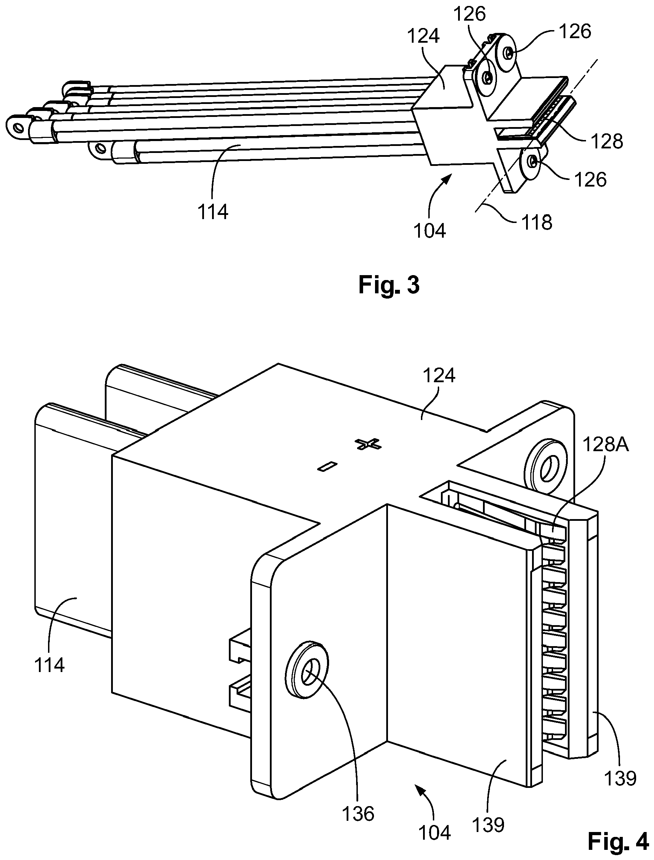

Fig. 2 illustrates schematically the connection between the power supply shelf 100 and a DC power distribution busbar 116. It should be noted that for reasons of simplifying the drawing, the input connectors 108 are not shown in Fig. 3. The elongated DC power distribution busbar 116 and the connector 104 have a common longitudinal axis 118. The busbar 116 has a first electrically conductive surface 120 and a second electrically conductive surface 122. The first electrically conductive surface 120 and the second electrically conductive surface 122 are arranged on opposing sides of the busbar 116. Thus, the first electrically conductive surface 120 and the second electrically conductive surface 122 can be connected to a positive and a negative pole of the DC power, respectively.

The connector 104 grips the busbar 116 similar to a card edge connector. As will become more apparent from the following Figures, the connector 104 according to one example has spring contacts arranged opposite to each other so that the first electrically conductive surface 120 and the second electrically conductive surface 122 are electrically contacted by the electrical power connector 104.

Fig. 3 schematically depicts an example of an electrical power connector 104 with a set of cables 114 attached thereto. However, it is clear that the electrical power connector 104 may also be designed to be connected to a flexible foil or to the conductive leads of a printed circuit board (PCB) for being connected the electronic components of the power supply shelf.

The electrical power connector 104 has an electrically insulating housing 124 which is for instance fabricated from a plastic material. Screw connectors 126 allow to fix the electrical power connector 104 at the casing 102 of the power supply shelf 100. As will become more apparent from the following Figures, the electrical power connector 104 comprises two rows of spring contact elements 128, each row of spring contact elements 128 being configured to electrically contact one pole of the busbar 116.

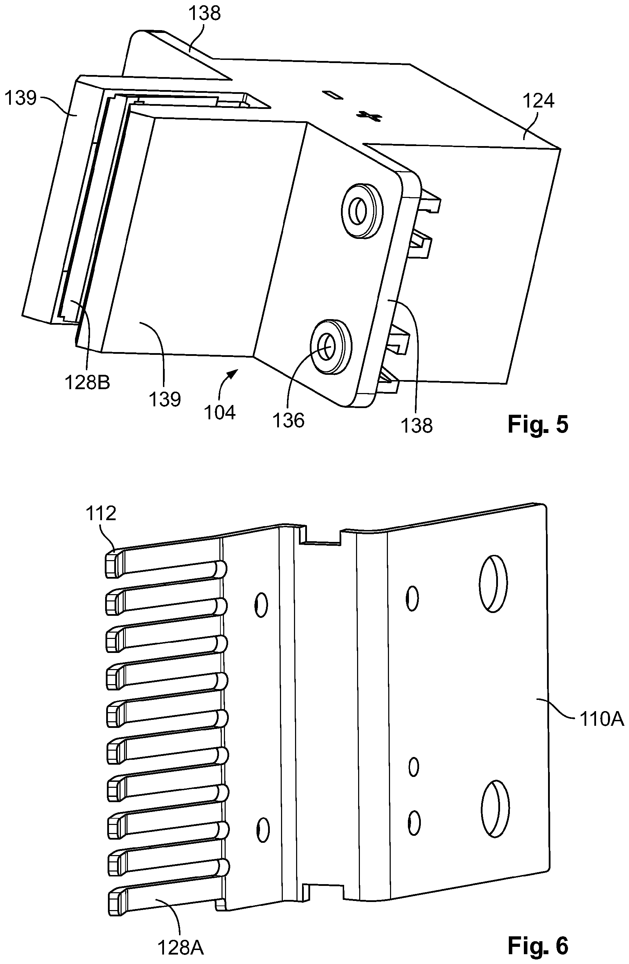

Turning now to Fig. 4 and 5, these Figures show the electrical power connector 104 in more detail. The electrical power connector 104 comprises a row of equidistantly arranged first spring contact elements 128A and, opposite to the first spring contact elements 128A, a symmetrical row of equidistantly arranged second spring contact elements 128B. These spring contact elements are protected by a spring contact housing 139. The spring contact housings 139 are integrally formed with the remaining connector housing 124. Openings 136 are arranged at lateral mounting flanges 138 so that the connector 104 can be screwed to the power supply shelf 100.

When attached to the busbar 116 of Fig. 2, the first spring contact elements 128A contact the side of the busbar which represents the plus pole, while the second spring contact elements 128B contact the opposing side of the busbar which represents the minus pole.

Fig. 6 shows the plurality of spring contact elements 128A which are for instance integrally formed with a contact plate 110A. The contact plate 110A and the spring contact elements 128B are advantageously formed as a stamped and bent metal part. The contact plate 110A is connected to the output cables of one polarity (e. g. the positive polarity as shown in Fig. 5. Although not shown in the drawings, the opposing spring contact elements 128B of the electrical power connector 104 are formed mirror-symmetrically and are integrally fabricated with a contact plate to be connected to the output cables of the opposing polarity (here the negative polarity). The spring contact elements 128 are each formed as resilient, unilaterally cut free spring arms with a contact region 112 for contacting the busbar 116 at the free end. The contact plate 110 with the spring contact elements 128 may for instance be fabricated from copper or steel.

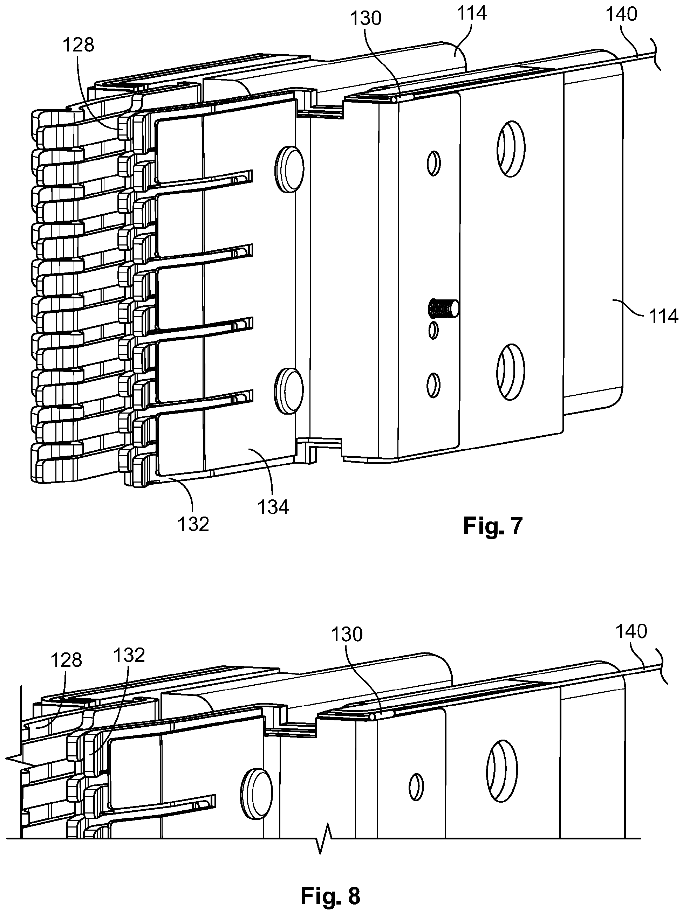

Furthermore, as illustrated in Fig. 7, where the housing 124 is not shown, the connector 104 comprises secondary springs 132 and a retaining bracket 134 for pressing the spring contact elements 128 towards the busbar 116.

It could be shown that it is essential for a failure free and safe operation that the spring forces of the first and second spring contact elements 128A, 128B are constant and remain essentially identical for all the spring contact elements 128. The same is valid for the spring characteristics of the secondary springs 132 and the retaining bracket 134. If the spring characteristics deteriorate due to a temperature rise, the spring forces lessen and the electrical resistance at the contact between the spring contact element 128 and the busbar surface increases. This increase in electrical resistance damages the spring contact element even more and an avalanche effect resulting in the connector housing catching fire may occur.

In order to be aware of any rise in temperature which gives an early indication of an impending failure, the present disclosure proposes to arrange a temperature sensing means inside the connector housing 124. As can be seen from Fig. 7, for instance a temperature sensor, e. g. a thermocouple, 130 may be arranged in close vicinity to at least one of the rows of first and second spring contact elements 128A, 128B. Importantly, the temperature sensor 130 registers a rise in temperature at a very early stage of a deterioration of the electrical contact. The output signal of the thermocouple 130 can be used to generate a warning signal long before the danger of an avalanche reaction arises.

Fig. 8 illustrates a detail of Fig. 7. It should be noted that in this Figure the harness of output cables 114 is only represented in a simplified schematic manner. As shown in Fig. 8, the thermocouple 130 may have a two-pole wiring 140 which can be connected to a control unit arranged inside the power supply shelf. The control unit may evaluate the output signal of the temperature sensor 130 and compare it to a pre-defined threshold value of a maximum admissible temperature. Additionally or alternatively, also a time dependent temperature profile can be monitored in order to anticipate a potential risk of spring force degradation. In Fig. 8 a thermocouple 130 is shown which exemplarily may be used as a temperature sensing means according to the present disclosure.

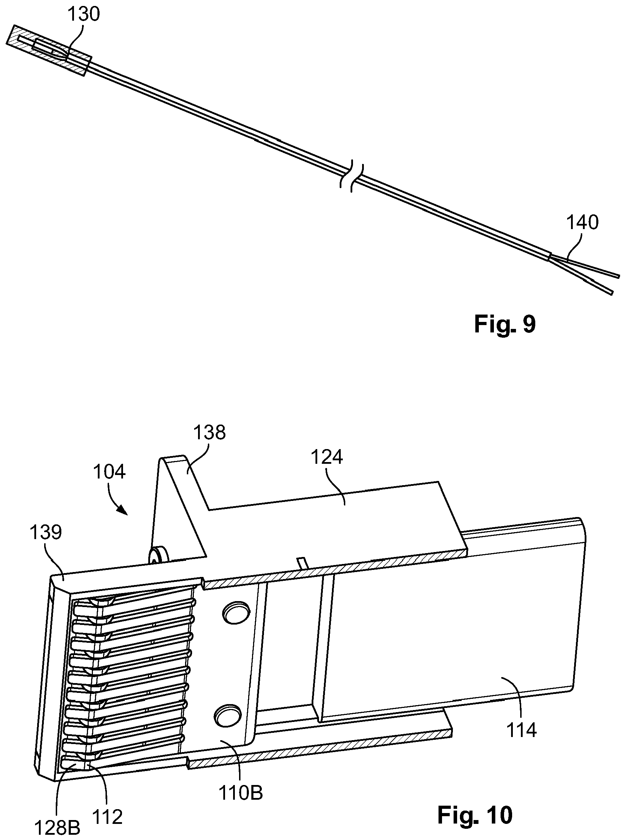

As an alternative, also a thermistor may be used as the temperature sensor. Fig. 9 exemplarily illustrates a micro thermistor probe 130. Such micro thermistor probes are advantageous in that they provide a rapid temperature response and can be mounted where space is limited. These miniature thermistors are potted in a polyimide tube with a thermally conductive epoxy. The sensing element is comprises an NTC sensor, i. e. a sensor with negative temperature coefficient resistance characteristics, where resistance of the sensor decreases several orders of magnitude as temperature increases.

Of course, any other suitable temperature sensing means may also be used as the temperature sensor 130.

An advantage of using such separately housed components can be seen in the fact that already existing connectors 104 may be retrofitted with a temperature sensing means.

However, also an integrated solution based on an MID component may advantageously be used. As mentioned above, MID is the abbreviation of the term "molded interconnect device" and comprises a three-dimensional circuit carrier which is injection molded from a modified polymeric material. This modification may allow laser activation of circuit tracks on the surface of the circuit carrier. The activated areas become metallized in a chemical metallization bath in order to build conductive tracks which are thus extending into the third dimension. Apart from laser direct structuring (LDS) techniques (additive as well as subtractive) also a two shot injection molding, hot embossing, and insert molding can be used for fabricating a three dimensional substrate that may be employed for assembling a temperature sensing unit according to the present disclosure. Advantageously, the connector housing may at least partly be formed as a molded interconnect device, having a plurality of conductive leads, wherein the temperature sensing means is mounted at the connector housing and is connected to the conductive leads.

If an LDS printed conductor path or any other 2D or 3D conductor printing process according to MID and/or LDS technology is applied to one of the inner half of the insulation body of the connector housing, then a digital sensor temperature sensor can be applied directly in the area of the contact springs and no wiring will be needed to connect a sensor in that area. Applying such sensor gives additional benefits as the digital sensor can be also packed as a system-on-chip (SOC) with an integrated microcontroller. Therefore, the sensor advantageously may be programmed to give a signal output which indicates an error. Such a smart connector may be operable to perform self-diagnosis and may also be part of a decentralized monitoring and safety system.

Fig. 10 shows a sectional view of the electrical power connector 104. According to a further advantageous example of the present disclosure, the temperature sensing means may also be integrated into the housing material, e. g. directly into at least one of the spring contact housings 139.

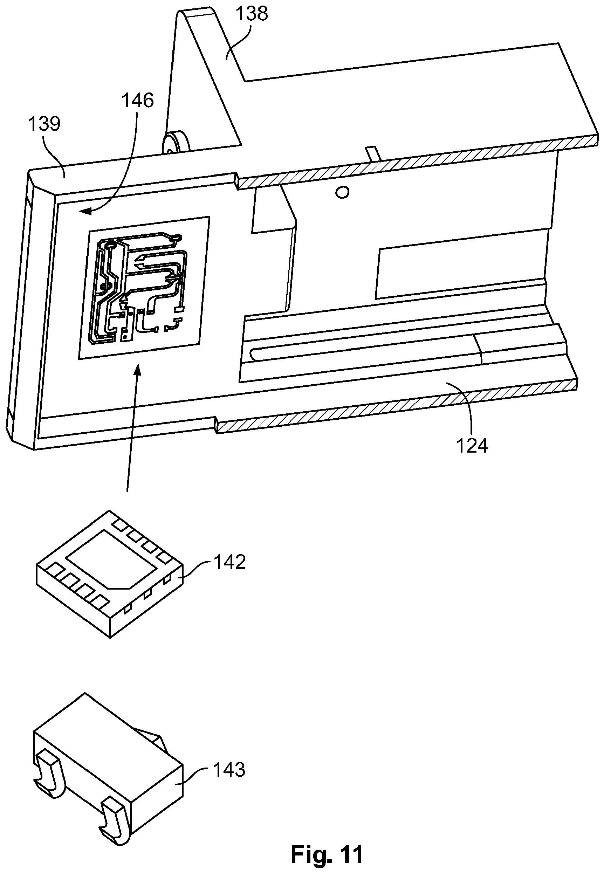

A first example is shown in Fig. 11, where the spring contact elements 128 and the output cable 114 are removed to show the inner surface 146 of the connector housing 124. As schematically illustrated, a lead pattern 144 is arranged on the inner surface of the connector housing 124. A preferably digital temperature sensor 142 may be soldered to the electrically conductive lead pattern 144. The digital temperature sensor 142 is exemplarily depicted as a surface mount device (SMD) digital sensor. Alternatively, a discrete voltage temperature sensor 143 may also be used.

The advantage of this arrangement can be seen in providing a connector where the temperature detection as well as a basic signal evaluation can be performed directly at the site to be monitored. The safety and robustness of the electrical power connector can thus be enhanced.

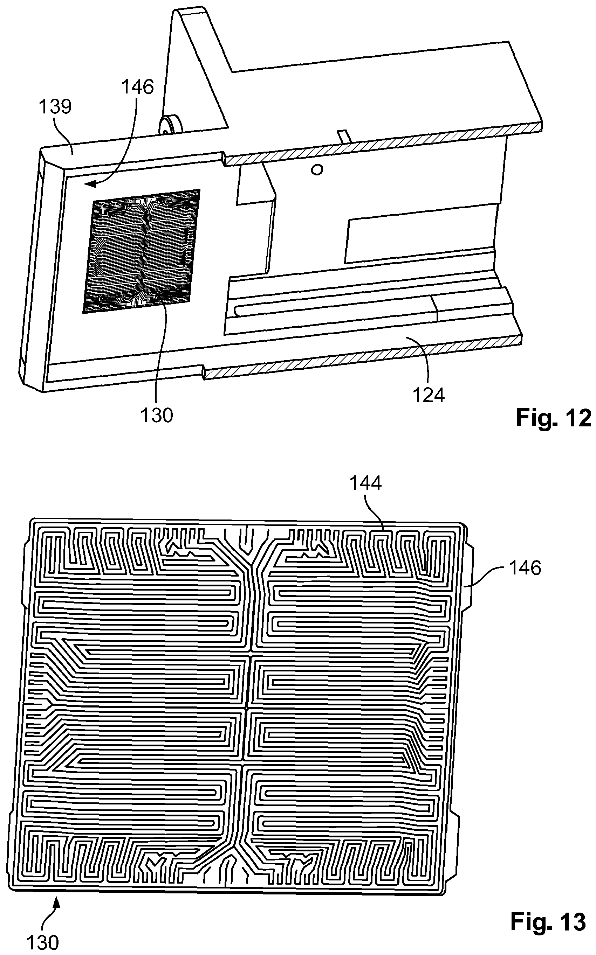

According to a further example of the present disclosure, the inner surface 146 of the connector housing 124 may directly provide the substrate for a temperature sensor. For instance, as schematically shown in Figure 12, lead patterns 144 forming one or more temperature sensors may be deposited directly onto the inner surface 146 of the spring contact housing 139.

Fig. 13 shows an example of such a temperature sensor 130 formed by a pattern 144 of resistive leads on the inner surface 146 of the spring contact housing 139. The resistive leads may for instance form a platinum resistance sensor. Alternatively, coil style sensors which measure the magnetic field strength may be used for indirectly measuring the temperature.

This extremely high level of integration allows for a minimal space requirement, a reduced component complexity and enhanced fabrication efficiency, and at the same time provides high accuracy and operational safety of the temperature monitoring process.

**REFERENCE NUMERALS**

| **Reference Numeral** | **Description** |
|---|---|
| 100 | power supply shelf |
| 102 | casing |
| 104 | electrical power connector |
| 105 | receptacle |
| 106 | cover |
| 108 | input connectors |
| 110, 110A, 110B | contact plate |
| 112 | contact region |
| 114 | output cable |
| 116 | DC power distribution busbar |
| 118 | longitudinal axis |
| 120 | first electrically conductive surface |
| 122 | second electrically conductive surface |
| 124 | connector housing |
| 126 | screw connection |
| 128, 128A, 128B | spring contact element |
| 130 | temperature sensor; temperature sensing means |
| 132 | secondary spring element |
| 134 | retaining bracket |
| 136 | openings for screws |
| 138 | mounting flange |
| 139 | spring contact housing |
| 140 | wiring of thermocouple |
| 142 | digital temperature sensor |
| 143 | discrete voltage temperature sensor |
| 144 | electrically conductive lead pattern |
| 146 | inner surface of spring contact housing/connector housing |

## Claims

1. Electrical power connector for contacting an elongated DC power distribution busbar (116), the electrical power connector (104) comprising:
a connector housing (124) with a receptacle (105) for partly receiving the elongated DC power distribution busbar (116),
at least one first spring contact element (128A) which is arranged at a first side of the receptacle (105), so that it can be pressed with a contact area to a first surface (120) of the elongated DC power distribution busbar (116);
at least one second spring contact element (128B) which can be pressed to a second surface (122) of the elongated DC power distribution busbar (116) opposing the first surface (120), wherein the at least one second spring contact element (128B) is arranged at a second side of the receptacle (105) opposing to the first side;
a temperature sensing means (130) arranged inside the connector housing (124) for monitoring a temperature at the at least one first and/or second spring contact element (128A, 128B).

2. Electrical power connector according to claim 1, further comprising at least one secondary spring element (132) which is in force transmitting contact with the at least one first and/or second spring contact element (128A, 128B).

3. Electrical power connector according to claim 1 or 2, wherein the temperature sensing means (130) comprises at least one temperature sensing element formed by a positive temperature coefficient, PTC, thermistor, and/or a negative temperature coefficient, NTC, thermistor, and/or a non-linear thermal resistor, and/or a pyroelectric sensor, and/or a bimetallic sensor.

4. Electrical power connector according to claim 3, wherein the temperature sensing means is formed as a integrated component (142) comprising an analog-digital-converter for generating a digital output signal.

5. Electrical power connector according to one of the preceding claims, wherein the temperature sensing means (130) comprises a current sensing unit for monitoring a current value at the at least one first and/or second spring contact element and an evaluation unit which is operable to calculate the temperature from the sensed current value.

6. Electrical power connector according to one of the preceding claims, wherein the temperature sensing means (130) comprises a separately housed sensor unit which is arranged to be in direct mechanical contact with the at least one first and/or second spring contact element (128A, 128B).

7. Electrical power connector according to one of the preceding claims, wherein the connector housing (124) is at least partly formed as a molded interconnect device, MID, having a plurality of conductive leads (144), and wherein the temperature sensing means (142) is mounted at the connector housing (124) and is connected to the conductive leads (144) and/or wherein the temperature sensing means comprises a printed sensing element arranged .

8. Electrical power connector according to one of the preceding claims, wherein the first and/or the second spring contact element (128A, 128B) comprises a unilaterally cut free spring arm with a contact region for contacting the busbar (116) at the free end.

9. Electrical power connector according to claim 8, wherein the spring arm has a connecting region at its fixed end which is connectable to a component to be provided with DC power and/or a component operable to output DC power.

10. Electrical power connector according to one of the preceding claims, wherein a plurality of said first spring contact elements (128A) are arranged equidistantly along a longitudinal axis (118) and a plurality of said second spring contact elements (128B) are arranged equidistantly along said longitudinal axis (118).

11. Electrical power connector according one of the preceding claims, wherein the temperature sensing means (130) comprises two or more temperature sensing elements.

12. Method of monitoring a connection between at least one electronic component to a DC power distribution busbar (116), using an electrical power connector (104) according to one of the preceding claims, the method comprising the following steps:
connecting the electrical power connector (104) to the elongated DC power distribution busbar (116), so that the at least one first spring contact element (128A) contacts a first pole of said DC power distribution busbar (116) and the at least one second spring contact element (128B) contacts a second pole of said DC power distribution busbar (116),
connecting the temperature sensing means (130) to a control unit which reads an output signal of the temperature sensing means and generates a warning signal if the output signal is indicative of an abnormal operational state.

13. Method according to claim 12, wherein the output signal of the temperature sensing means (130) is compared to a predefined temperature threshold value, and the warning signal is generated if the output signal exceeds the threshold value.

14. Method according to one of the claims 12 or 13, wherein the temperature sensing means (130) detects an electrical current density at the at least one first and/or second spring contact element and calculates a corresponding temperature therefrom.

15. Method according to one of the claims 12 to 14, wherein the control unit is arranged inside the electrical power connector (104), and the warning signal is a shutdown signal which disconnects the at least one electronic component from the DC power distribution busbar (116).
